# EUROPEAN PATENT APPLICATION

(11) **EP 1 045 330 A2**
(43) Date of publication of application: **18.10.2000**
(21) Application number: 00303091.3
(22) Date of filing: 12.04.2000
(51) Int. Cl.: G06K 7/10

(54) **Low power illuminator**

(30) Priority: 13.04.1999 US 292781
(71) Applicant: Hewlett-Packard Company, Palo Alto, California 94304 (US)
(72) Inventor: Gardner, Richard Lynn, Jr., Greeley, Colorado 80634 (US); Johnson, Kristianne Emma, Fort Collins, Colorado 80525 (US); Pennington, Roy Edwin, Loveland, Colorado 80538 (US)
(74) Representative: Powell, Stephen David

(57) **Abstract**

An illuminating device (320) comprises a light source (400) associated with a lens (510) having an integrally formed reference surface (580) to which the light source (400) is attached. The light source (400) is a linear array (432) of surface mount light-emitting diodes (430) that emit light in a direction parallel to the surface (424) to which they are mounted. The precise location of the light source (400) relative to the lens (510) concentrates the light emitted from the light source (400) onto the object which is to be illuminated, thus reducing the intensity of light required and the power requirement of the light source (400).

## Description

The present invention relates generally to a low power illuminator and, more particularly, to a low power illuminator used in a bar code reader of the type used in an automated media exchanger.

An illuminator is an optical assembly used to focus light onto an object, thus, illuminating the object. An illuminator is often used in conjunction with an imaging device which is used to generate machine-readable image data, referred to herein simply as image data, of the illuminated object. Illuminators may be used in a variety of applications, such as electronic scanners and bar code readers. An illuminator used in an electronic scanner may, as an example, illuminate text that is to be converted to image data by an imaging device. An illuminator used in a bar code reader serves to illuminate a bar code, which is converted to image data by an imaging device.

Bar codes are used in numerous applications to identify objects to which the bar codes are affixed. Examples of bar codes include the uniform price code used to identify retail goods and various forms of shipping labels used to track parcels. Bar codes may also be affixed to media pieces located in an automated media exchanger and may serve to identify the media pieces to which the bar codes are affixed. A bar code is an optical symbol containing coded information, wherein the symbol is able to be imaged by an imaging device. The imaging device generates an image of the bar code and converts the image to image data. The image data is output to a processor, which deciphers the image data representing the image of the bar code to "read" the bar code. Reading the bar code is the operation of deciphering the bar code to obtain the information encoded in the bar code. The information encoded in the bar code may, as an example, identify the object to which the bar code is affixed.

A bar code may, as an example, be a representation of a character set, e.g., ASCII characters represented by binary numbers. One type of bar code format that represents a binary number consists of an array of alternating relatively reflective and relatively nonreflective surfaces wherein the transition from one surface to an adjacent surface represents the transition from one bit to another bit of the binary number. The alternating reflective and nonreflective surfaces may, for example, be alternating reflective and nonreflective stripes. The reflective stripes are sometimes referred to herein as spaces and the nonreflective stripes are sometimes referred to herein as bars. The bars may, as an example, be dark-colored stripes and the spaces may, as an example, be light-colored stripes. Each stripe, thus, represents one bit of the binary number. The stripes may, as an example, be either wide or narrow. A wide stripe may represent a one and a narrow stripe may represent a zero. The binary number represented by the bar code is, thus, defined by the widths of the alternating bars and spaces.

The bar code format described above has numerous different specifications that may apply to the arrangement of the bars and spaces. The specifications may define the numbers of, and widths of, the bars and spaces used to represent the characters encoded in the bar code. The specifications may also define the relative reflectivity of the bars and spaces. For example the specifications may define the reflectivity of a space relative to a bar. Other bar code formats are known in the art and may, as examples, comprise two-dimensional arrays of reflective and nonreflective squares or concentric reflective and nonreflective circles. All the bar code formats, however, have relative reflective and relative nonreflective surfaces.

A bar code reader is a photoelectric device that is used to read bar codes. Reading a bar code is the process of analyzing the areas of high and low reflectivity to decipher the information encoded in the bar code. The bar code reader typically comprises an illuminator, an imaging device, and a processor. The illuminator serves to illuminate the bar code via an illumination beam of light. The illuminator may, for example, be a laser or an array of light-emitting diodes. An image beam of light constituting an image of the bar code reflects from the bar code. The imaging device receives the image beam and converts the image of the bar code to image data. The processor analyzes the image data to distinguish the image data representing the reflective surfaces from the image data representing the nonreflective surfaces. Based on the analysis of the image data, the processor is able to decipher the information encoded in the bar code.

The illuminator is required to uniformly illuminate the bar code, otherwise, the processor may be unable to distinguish the reflective surfaces from the nonreflective surfaces. For example, if one end of the bar code is more intensely illuminated than the other end of the bar code, the nonreflective surfaces in the intensely illuminated end may reflect more light than the reflective surfaces in the less intensely illuminated end of the bar code. The processor will likely be unable to read the bar code because it will not be able to distinguish the nonreflective surfaces from the reflective surfaces throughout the bar code.

The illuminator typically comprises a light source associated with a lens. The lens may have a focal point as is known in the art. When the light source is precisely located at the focal point, the illumination beam is able to be focused efficiently on the object being illuminated. When the light source is located a distance from the focal point, the light energy constituting the illumination beam will be partially wasted because the illumination beam will diverge, converge, or steer from the object which is to be illuminated. Conventional illuminators are not able to be manufactured with the tolerance between the location of the light source and the focal point low enough to efficiently use the light emitted by the light source. The conventional method of resolving the inefficient use of the light energy is to increase the light intensity emitted by the light source, which requires an increased amount of power to be supplied to the light source.

Bar codes, as described above, are often used in autochangers to identify the media pieces that may be stored in the autochanger. An autochanger is a device that stores media pieces in a library and moves selected media pieces from the library to a media player when a user requests information stored on selected media pieces. Likewise, when the user no longer requires the information stored on a selected media piece, the autochanger moves the selected media piece from the media player to a specific location in the library. The autochanger uses a media handling device, sometimes referred to herein as a picker, to move the selected media pieces between the library and the media players. Bar codes may be affixed to the media pieces and may serve to identify the contents of the media pieces. A bar code reader, as described above, may be affixed to the picker and may serve to read the bar codes affixed to the media pieces.

An objective in the design of an autochanger is to minimize the power consumption of the autochanger. Minimizing the power consumption allows the autochanger to operate with a minimally sized power supply, which, in turn, minimizes the size of the autochanger. The same objective of minimizing power consumption applies to the picker. The picker is a mobile device that operates in the tight confines of the autochanger, which creates problems in supplying power to the picker. The picker may, for example, be supplied power through a conventional cable, e.g., a ribbon cable, or through a conventional brush system.

A ribbon cable is a flexible cable that conducts current between the power source and the picker. The ribbon cable may also conduct data signals between a processor and the picker. As the picker moves throughout the autochanger, the ribbon cable remains attached to the picker. As the power requirements of the picker increase, the diameter of the ribbon cable must increase to accommodate the increased power requirements. The increased diameter of the ribbon cable increases the rigidity of the cable and may cause the ribbon cable to bind on the components located within the tight confines of the autochanger.

The brush system may consist of rigid conductors, e.g., conductive rails, affixed to the interior of the autochanger along paths that the picker travels. Relatively flexible conductive brush elements may be affixed to the picker wherein the brush elements electrically contact the rigid conductors. As the picker moves, the brush elements move along the rigid conductors so as to maintain constant electrical contact with the rigid conductors, which allows electric current to flow between the rigid conductors and the brush elements. The amount of current that may flow between the rigid conductors and the brush elements is proportional to the size of the rigid conductors and the brush elements in addition to the number of rigid conductors and brush elements used in the autochanger. In order to maintain constant electric current flow, it is critical that the electrical conductive surfaces between the brush elements and the rigid conductors remain free of contaminants that may interrupt the current flow between the rigid conductors and the brush elements.

As the power requirements of the picker increase, the electric current passing between the rigid conductors and the brush elements increases accordingly. This current increase may cause oxidation to form on the conductive surfaces, which interferes with the electric current flow between the rigid conductors and the brush elements. Overcoming this problem may be accomplished by increasing the number of, or size of, the brush elements used by the autochanger. This solution, however, increases the weight, complexity, and cost of the autochanger. Increased power requirements also require the autochanger to have a larger power supply, which increases the size and cost of the autochanger.

One method of reducing the power requirements of the picker and, thus, the autochanger, is to provide a bar code reader which requires minimal power to operate. Therefore, a need exists for a bar code reader that is able to be located in a picker and which requires minimal power to operate.

An illuminating device that requires minimal electric power is disclosed herein. The illuminating device may comprise a light source associated with a lens. The lens may have an integrally formed reference surface to which the light source is attached. The light source may, as an example, be a linear array of surface mount light-emitting diodes that emit light in a direction parallel to the surface to which they are mounted. The integrally formed lens and reference surface used in conjunction with the surface mount light-emitting diodes reduce the tolerances in the location of the light source relative to the lens. Accordingly, the light source may be precisely located relative to the lens. This precise location of the lens concentrates the light emitted from the light source onto the object which is to be illuminated. This light concentration reduces the intensity of light required to be emitted by the light source and, thus, reduces the electric power requirement of the light source.
Fig. 1 is a side perspective view of an autochanger illustrating a picker associated with a magazine.
Fig. 2 is a side perspective view of an illuminator of the type summarily illustrated in Fig. 1.
Fig. 3 is a side view of the illuminator of Fig. 2.
Fig. 4 is an enlarged view of a portion of Fig. 3.
Fig. 5 is an internal side view of the picker of Fig. 1.

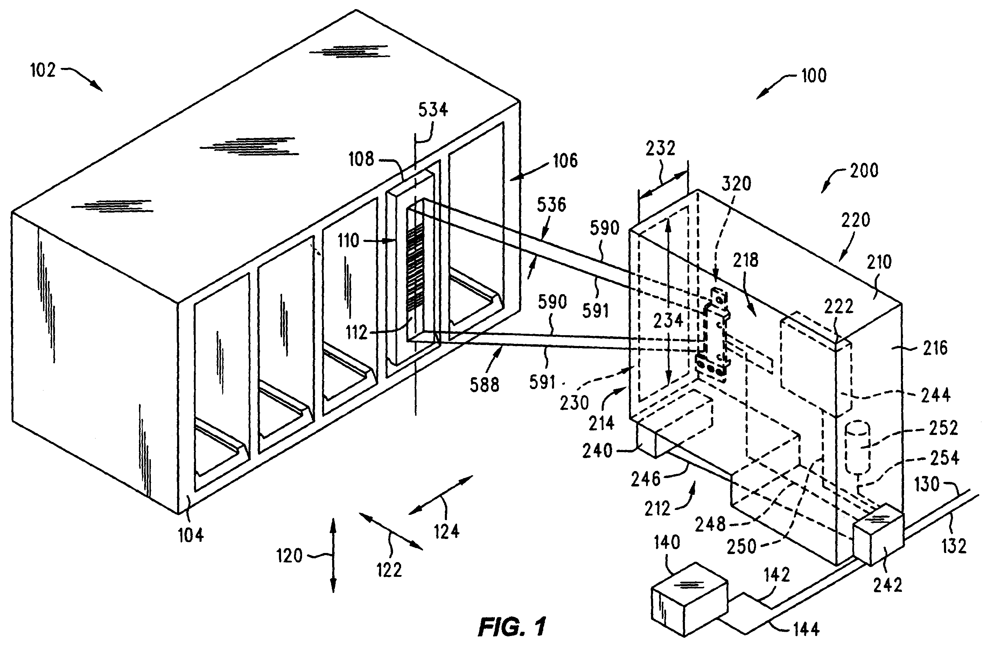

Figs. 1-5 illustrate an illumination system 320 comprising a first substrate 500 having a substrate surface 580 formed thereon; at least one light source 400 located on the substrate surface 580; at least on light path 534 extending between the at least one light source 400 and an object to be illuminated by the at least one light source 400; a lens 510 formed in the first substrate 500 and located within the at least one light path 534; wherein at least a portion of the substrate surface 580 is substantially parallel to the portion of the light path 534 extending between the at least one light source 400 and the lens 510.

Figs. 1-5 also illustrate a method of illuminating an object, the method comprising: providing a first substrate 500 having a substrate surface 580 formed thereon; providing at least one light source 400 mounted to the substrate surface 580; providing a light path 534 extending between the at least one light source 400 and an object to be illuminated by the at least one light source 400; providing a lens 510 formed in the first substrate 500 and located within the at least one light path 534; wherein at least a portion of the substrate surface 580 is substantially parallel to the portion of the light path 534 extending between the at least one light source 400 and the lens 510.

Referring to Fig. 1, the following description describes an illuminator 320 used in an autochanger 100. Specifically, the illuminator 320 is located in a picker device 200 and is used to illuminate bar codes, of which the bar code 112 is an example. When the bar code 112 is illuminated, an imaging device 244 may read the bar code in a conventional manner. It is to be understood, however, that the illuminator 320 described herein as being used in the autochanger 100 is for illustration purposes and that the illuminator 320 may be used in other applications, such as band held bar code readers and electronic scanners.

Except for the addition of the illuminator 320 and the imaging device 244, as will be described in further detail below, the autochanger 100 and the components thereof, including the picker 200, may, for example, be of the type commercially available from the Hewlett-Packard Company and sold as Model Number HP 4226w or of the type described in either of the following United States Patents: 5,644,559 of Christie, et al., for FLIP LATCH ASSEMBLY FOR MEDIA AUTOCHANGER; and 5,682,096 of Christie, et al., for METHOD AND APPARATUS FOR MONITORING OPERATING POSITIONS OF A MEDIA AUTOCHANGER, which are both hereby incorporated by reference for all that is disclosed therein.

Autochangers, including the components and operation thereof are disclosed, in part, in the following United States patent applications: serial number of Gardner for OPTICAL ASSEMBLY HAVING LENS OFFSET FROM OPTICAL AXIS, filed on the same date as this application (attorney docket number 10971597-1); serial number of Gardner et al. for GUIDANCE SYSTEM AND METHOD FOR AN AUTOMATED MEDIA EXCHANGER, filed on the same date as this application (attorney docket number 10971595-1); serial number of Gardner et al. for IMAGING APPARATUS ALIGNMENT SYSTEM AND METHOD, filed on the same date as this application (attorney docket number 10971594-1); serial number of Gardner for CALIBRATION SYSTEM FOR AN IMAGING APPARATUS AND METHOD, filed on the same date as this application (attorney docket number 10971593-1); serial number of Kato et al. for METHOD OF DECIPHERING BAR CODES, filed on the same date as this application (attorney docket number 10970585-1); serial number of Gardner, et al. for AUTOMATED OPTICAL DETECTION SYSTEM AND METHOD, filed on the same date as this application (attorney docket number 10971596-1); serial number of Gardner for ALIGNMENT APPARATUS AND METHOD FOR AN IMAGING SYSTEM, filed on the same date as this application (attorney docket number 10982315-1); and serial number of Gardner for METHOD AND APPARATUS FOR SETTING FOCUS IN AN IMAGING DEVICE, filed on the same date as this application (attorney docket number 10982313-1); which are all hereby incorporated by reference for all that is disclosed therein.

Fig. 1 only illustrates the components comprising the autochanger 100 that are necessary to illustrate the illuminator 320 used in the autochanger 100. The autochanger 100 may have a plurality of magazines, of which the magazine 102 is an example, two rails 130 and 132, a power supply 140, and a picker 200. The magazine 102 may be a substantially parallelepiped structure with a front side 104 that faces the picker 200. The front side 104 may have a plurality of slots 106 that are adapted to hold media pieces. The autochanger 100 illustrated herein is depicted as being adapted to operate with digital linear tape cartridges, thus, the magazine 102 may be adapted to hold digital linear tape cartridges in the slots 106. A slot 108 in the front side 104 of the magazine 102 is illustrated as being occupied by a digital linear tape cartridge 110.

Bar codes may be affixed to the digital linear tape cartridges located in the slots 106 in the magazine 102. As an example, a bar code 112 is illustrated as being affixed to the digital linear tape cartridge 110. The bar codes may serve to identify the digital linear tape cartridges to which they are attached in a conventional manner. As will be described in detail below, the autochanger 100 may use the illuminator 320 to illuminate the bar codes so that they may be read by the imaging device 244.

The power supply 140 may supply electric current that is used to operate the components comprising the autochanger 100. The power supply 140 may provide an electric potential across the rails 130 and 132 via a first power line 142 and a second power line 144. The rails 130 and 132 may be electric conductors that extend throughout the autochanger 100 and may serve to conduct electric power to the picker 200 as will be described below. Only a portion of the rails 130 and 132 is illustrated in Fig. 1.

The picker 200 may serve to transport digital linear tape cartridges within the autochanger 100. The picker 200 may be a substantially parallelepiped structure having a top side 210, a bottom side 212, a front side 214, a back side 216, a left side 218, and a right side 220. A corner 222 may be defined by the intersection of the top side 210, the back side 216, and the left side 218. The front side 214 may have an opening 230. The opening 230 may have a width 232 and a height 234 which are appropriately sized to allow digital linear tape cartridges to pass through the opening 230 and into the interior of the picker 200.

The imaging device 244 may be located in the proximity of the corner 222 of the picker 200. The imaging device 244 may, as an example, be a bar code reader as is known in the art. The imaging device 244 may be adapted and situated within the picker 200 to read the bar codes affixed to the digital linear tape cartridges that may be located in the slots 106 in the magazine 102. The imaging device 244 may receive light from an image beam, not shown.

The illuminator 320 may be affixed to the left side 218 of the picker 200. The illuminator 320 may serve to illuminate the bar codes affixed to digital linear tape cartridges located in the slots 106 in the magazine 102. The illuminator 320 along with its location in the picker 200 will be described in further detail below. A plunge mechanism 252 may also be located within the picker 200. The plunge mechanism 252 may be an electro-mechanical device that may serve to insert and extract digital linear tape cartridges into and out of the slots 106 in a convention manner.

A servo system 240 may be operationally attached to the picker 200. The servo system 240 may serve to move the picker 200 within the autochanger 100 in a conventional manner. Specifically, the servo system 240 may serve to move the picker 200 in a vertical direction 120, a plunge direction 122, and a transverse direction 124. The plunge direction 122 may be a direction that is parallel to the shortest possible axis extending between the magazine 102 and the picker 200. The transverse direction 124 may be a direction that is parallel to an axis that is normal to the left side 218 or the right side 220 of the picker 200. The vertical direction 120 may be parallel to an axis that is normal to the top side 210 or the bottom side 212 of the picker 200.

A power distribution box 242 may be affixed to the picker 200. The distribution box 242 may also be electrically connected to the rails 130 and 132 by the use of conventional electric brushes, now shown. The distribution box 242 may be electrically connected to the servo system 240 by a servo power line 246. The distribution box 242 may be electrically connected to the illuminator 320 by an illuminator power line 248. The distribution box 242 may be electrically connected to the plunge mechanism 252 by a plunge power line 254. Additionally, the distribution box 242 may be electrically connected to the imaging device 244 by an image power line 250. The distribution box 242 may conduct electric current from the rails 130 and 132 and distribute the electric current to the above-described components comprising the picker 200.

The picker 200 requires electric current to operate the servo system 240, the imaging device 244, the plunge motor 252, and the illuminator 320. This current may be produced by the power supply 140 and conducted to the picker 242 by the brushes in the distribution box 242 as previously described. As the current requirements of the picker 200 increase, the current supplied by the power supply 140 has to increase proportionally. This may require the use of a physically larger power supply 140, which increases the size and weight of the autochanger. Furthermore, the larger power supply 140 may occupy space within the autochanger 100 that may otherwise be available for the storage of digital linear tape cartridges. The increased current requirements of the picker 200 require increased current to flow between the rails 130 and 132 and the distribution box 242. This increased current flow may cause the rails 130 and 132 and the brushes, not shown, to oxidize, which decreases their efficiency and may cause the current flow to become disrupted. The increased current flow may also cause the brushes to wear prematurely, which will render the picker 200 inoperable. Accommodating the increased current flow may require larger brushes and rails 130 and 132, which increases the size and cost of the autochanger 100.

These above-described problems may be alleviated, in part, by using components within the picker 200 that require minimal amounts of electric current. The illuminator 320 disclosed herein uses minimal electric current by concentrating light 588 emitted by the illuminator 320 so as to most efficiently illuminate a bar code affixed to a digital linear tape cartridge. When the light 588 is used efficiently, less light 588 is required to be emitted by the illuminator 320 and, accordingly, less electric current is required to be supplied to the illuminator 320. This minimal electric current use by the illuminator 320 helps to alleviate the above-described problems associated with extensive electric current use by the picker 200.

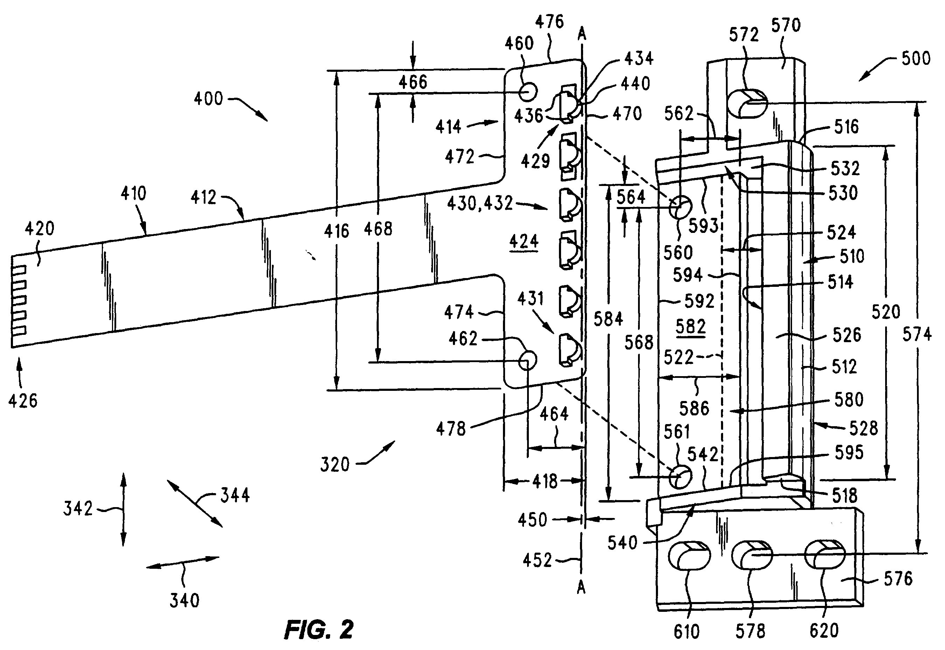

Having described the autochanger 100, the illuminator 320 will now be described followed by a description of the illuminator 320 integrated into the picker 200. Referring to Fig. 2, the illuminator 320 may have a light assembly 400 associated with a lens assembly 500. The light assembly 400 will be described below followed by a description of the lens assembly 500. Three spatial directions may be used with reference to the illuminator 320. The spatial directions are the x-direction 340, the y-direction 342, and the z-direction 344.

The light assembly 400 may comprise a linear array 432 of light-emitting diodes (LEDs) 430 mounted to a substrate 410. The LEDs 430 may, as an example, be commercially available from the Hewlett-Packard Company as model HSMC-S660. The substrate 410 may, as an example, be a flexible printed circuit card as is known in the art. The substrate 410 may have a back end 420 and a head 414 connected by a stem 412. The back end 420 of the substrate 410 may have an electrical connector 426 integrally formed into the substrate 412. The stem 412 may serve as a vehicle to conduct electric current between the connector 426 and the head 414 in a conventional manner. The head 414 may serve to conduct electric current from the stem 412 to the array 432 of LEDs 430.

The head 414 may have a front edge 470, a left edge 476, a right edge 478, a first back edge 472 and a second back edge 474. The first back edge 472 may extend between the left edge 476 and the stem 412. The second back edge 474 may extend between the right edge 478 and the stem 412. The first back edge 472 and the second back edge 474 may be approximately located on a common axis. The head 414 may have a width 416, e.g., 35 millimeters, extending between the left edge 476 and the right edge 478. The head 414 may have a length 418, e.g., 10 millimeters, extending between either the first back edge 472 or the second back edge 474 and the front edge 470. A surface 424 may be defined by the boundaries of the front edge 470, the top edge 476, the right edge 478, and an axis extending along the first back edge 472 and the second back edge 474.

The head 414 may have two alignment holes, a left alignment hole 460 and a right alignment hole 462. The alignment holes 460 and 462, as will be described below, may serve to align the head 414 at a predetermined location relative to the lens assembly 500. The center point of the left alignment hole 460 may be located a distance 464, e.g., 6.5 millimeters, from the front edge 470 of the head 414. The center point of the left alignment hole 460 may also be located a distance 466, e.g., 2.5 millimeters, from the left edge 476 of the head 414. The right alignment hole 462 may be located similar distances from the front edge 470 and the bottom edge 478 of the head 414. The center point of the left alignment hole 460 may be located a distance 468, e.g., 30 millimeters, from the center point of the right alignment hole 462.

The array 432 of LEDs 430 may be mounted on the surface 424 of the head 414. The array 432 of LEDs 430 may have a left LED 429 and a right LED 431. Each LED may have two ends 436 and a front side 434. The ends 436 may serve as mounting areas to operatively connect the LEDs 430 to the surface 424 of the head 414, e.g., the sides 436 of the LEDs 430 may be soldered to the surface 424. The front sides 434 of the LEDs 430 may each have a light emitter 440. The light emitters 440 may emit light when electric current passes in a predetermined direction between the ends 436 of the LEDs 430. The LEDs 430 may be mounted to the surface 424 so that the light emitters 440 emit light on a plane that is approximately parallel to the surface 424. The front sides 434 of the LEDs 430 may abut an axis 452, illustrated by the reference line AA in Fig. 2. The axis 452 may be located at a predetermined position relative to the lens assembly 500 when the light assembly 400 is mounted to the lens assembly 500 as is described below.

It is assumed, for the purpose of illustration, that the front edge 470 of the head 414 is straight, thus, the axis 452 may be located a distance 450, e.g., 0.5 millimeters from the front edge 470. Alternatively, the axis 452 may be located on the front edge, thus, eliminating the distance 450. The dimensions of the head 414 may be controlled during manufacturing with enough precision that the location of the axis 452 may be referenced to the front edge 470 of the head 414. Accordingly, the axis 452 may be referenced to the center points of the alignment holes 460 and 462, which assures that the LEDs 430 are located at a predetermined location relative to the lens assembly 500.

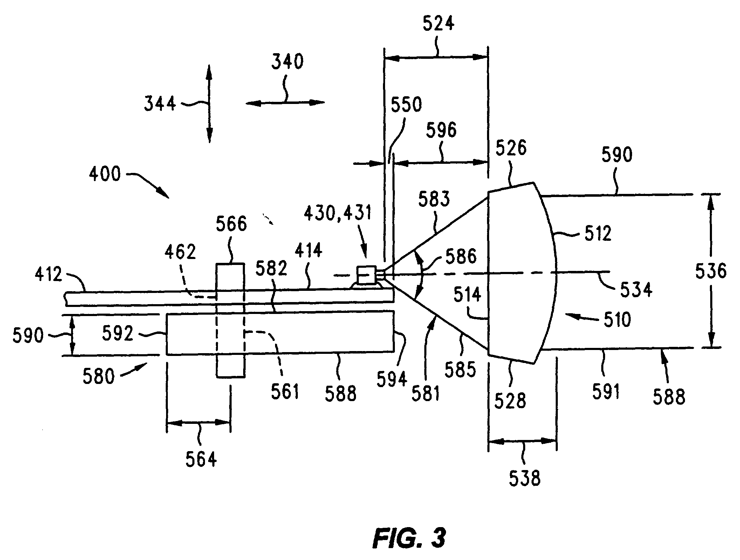

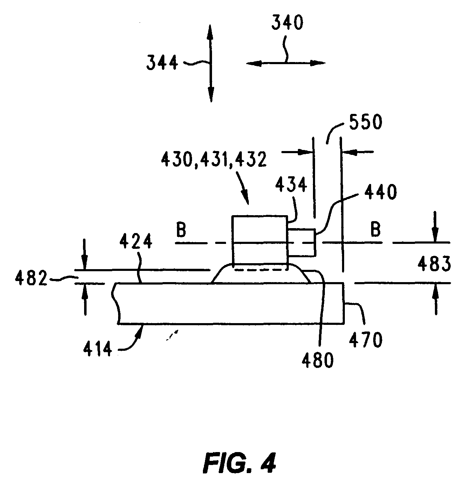

Fig. 3 is a side view of the illuminator 320 illustrating side views of the right LED 431, the head 414, and the lens assembly 500. All of the LEDs 430 mounted to the head 414 may be mounted in a manner that is substantially similar to the right LED 431. Fig. 4 is an enlarged view of the right LED 431 mounted to the head 414. A solder junction 480 may be used to electrically and mechanically attach the right LED 431 to the surface 424 of the head 414 so that the right LED 431 is located a predetermined distance 482 from the surface 424 of the head 414. A reference axis BB may extend through the midpoint of the emitter 440. The axis BB may be located a distance 483, e.g., 0.5 millimeters, from the surface 424. The LEDs 430 may be of the type known in the art as surface mount light-emitting diodes. The use of surface mount light-emitting diodes substantially reduces the tolerances associated with the distance 482 and the distance 483. The distance 482 may, as an example, have a tolerance of 0.025 millimeters. The distance 550 may, as an example, have a tolerance of 0.08 millimeters.

Referring again to Fig. 2, the lens assembly 500, sometimes referred to herein as a substrate, may comprise an integrally formed lens 510 and reference surface 580. The lens 510 and the reference surface 580 may be connected by a left wall 530 and a right wall 540. The lens 510 may have a convex surface 512 and a planar surface 514. The lens 510 may have a top side 526 and a bottom side 528 wherein the top side 526 and the bottom side 528 may join the convex surface 512 and the planar surface 514. The lens 510 may have a left end 516 and a right end 518. A length 520, e.g., 32 millimeters, may extend between the left end 516 and the right end 518. Referring again to Fig. 3, the lens 510 may have a height 536, e.g., 8 millimeters, extending between the junction of the top side 526 and the convex surface 512 and the junction of the bottom side 528 and the convex surface 512. The lens 510 may have a width 538, e.g., 3.5 millimeters, extending between the planar surface 514 and the approximate mid-section of the convex surface 512.

Additionally, the lens assembly 500 may have a left mounting tab 570 and a right mounting tab 576. The left mounting tab 570 may protrude from the left wall 530. The right mounting tab 576 may protrude from the right wall 540. The left mounting tab 570 may have a left mounting hole 572. The right mounting tab 576 may have a right mounting hole 578. The right mounting tab 576 may additionally have two alignment holes 610 and 620. The center point of the left mounting hole 572 and the center point of the right mounting hole 578 may be separated by a distance 574, e.g., 50 millimeters. The left mounting hole 572 and the right mounting hole 578 may serve to mount the illuminator 320 to a support structure and may be slightly oblong to account for tolerances between the illuminator 320 and the support structure. The alignment holes 610 and 620 may serve to assure that the illuminator 320 is properly positioned relative to the support structure.

Referring again to Fig. 3, the lens 510 may have a focal plane 534, as is known in the art, that appears as a line extending in the x-direction 340 when illustrated from the side view of Fig. 3. The lens 510 may have a back focal length 524 that is measured in the x-direction 340 from the planar surface 514 of the lens 510 toward the reference surface 580. Referring again to Fig. 2, a focal axis 522 may be a line located on the focal plane 534, Fig. 3, and at a distance of the back focal length 524 from the planar surface 514 of the lens 510. The focal axis 522 may extend in the y-direction 342 approximately the length 520 of the lens 510. The focal axis 522 may be used as a reference to align the linear array 430 of LEDs 432 to the lens 510. As an example, the emitters 440 of the LEDs 432 may be located on the focal axis 522.

The reference surface 580 may have a back edge 592, a front edge 594, a left edge 593 and a right edge 595. The reference surface 580 may have a length 584, e.g., 36 millimeters, extending between the left edge 593 and the right edge 595. The reference surface 580 may also have a width 586, e.g., 10 millimeters, extending between the back edge 592 and the front edge 594. Referring briefly to Fig. 3, the reference surface 580 may have a top side 582 and a bottom side 588 separated by a width 590, e.g., 1 millimeter. Referring again to Fig. 2, the length 584 and the width 586 of the reference surface 580 may be appropriately sized so that the head 414 of the light source 400 may set on the reference surface 580. The reference surface 580 may have a left alignment hole 560 and a right alignment hole 561. The center point of the left alignment hole 560 may be located a distance 562, e.g., 7.5 millimeters from the front edge 594 and a distance 564, e.g., 3 millimeters, from the left edge 593. The right alignment hole 561 may be similarly located relative to the front edge 594 and the right edge 595. The center point of the left alignment hole 560 may be located a distance 568, e.g., 30 millimeters, from the center point of the right alignment hole 561. The alignment holes 560 and 561 may be substantially similar to the alignment holes 460 and 462 so that when they are aligned along common axes, the focal axis 522 of the lens 510 is located on the light emitters 440 of the LEDs 430.

The left wall 530 and the right wall 540 may extend between the lens 510 and the reference surface 580. Specifically, the left wall 530 may extend between the lens left end 516 and the left edge 593 of the reference surface 580. The left wall 530 may have a side 532 facing the reference surface 580 and the planar 514 side of the lens 510. The right wall 540 may extend between the lens right end 518 and the right edge 595 of the reference surface 580. The right wall 540 may have a side 542 facing the reference surface 580 and the planar side 514 of the lens 510. The left wall 530 and the right wall 540 may serve as structural members for the lens assembly 500, and may, likewise, maintain the reference surface 580 at a fixed location relative to the lens 510.

Having described the light assembly 400 separate from the lens assembly 500, the two assemblies will now be described integrated together to form the illuminator 320. Referring to Fig. 3, the light assembly 400 may set on the top side 582 of the reference surface 580 of the lens assembly 500 as will be described in detail below. The reference surface 580 may serve as a support structure to align the LEDs 430 to the lens 510. A securing pin 566 may be placed through the right alignment hole 462 in the head 414 and the right alignment hole 561 in the reference surface 580. A similar pin, not shown, may be placed through the left alignment hole 460 in the head 414 and the left alignment hole 560 in the reference surface 580, Fig. 2. A conventional adhesive may be used to bind the top side 582 of the reference surface 580 to the head 414 of the light source 400.

The LEDs 430 may emit a source beam 581 of light. The source beam 581 may be defined as having a top side 583 and a bottom side 585 when viewed from the side view of Fig. 3. The top side 583 may extend between the emitters 440 on the LEDs 430 and the junction of the top side 526 and the planar side 514 of the lens 510. The bottom side 585 may extend between the emitters 440 and the junction of the bottom side 528 and the planar side 514 of the lens 510. A source angle 586 may exist between the top side 583 and the bottom side 585. The LEDs 430 may be selected so that the majority of light emitted by the LEDs 430 is emitted within the source angle 586.

The lens 510 serves to collimate the source beam 581 to form an illumination beam 588. The illumination beam 588 may be defined as having a top side 590 and a bottom side 591 when viewed from the side view of Fig. 3. The top side 590 may originate from the vicinity of the junction of the top side 526 and the convex side 512 of the lens 510. The bottom side 591 may originate from the junction of the bottom side 528 and the convex side 512 of the lens 510. The result of collimating the source beam 581 is that the top side 590 of the illumination beam 588 is substantially parallel to the bottom side 591, which are both substantially parallel to the focal plane 534. Collimating the source beam 581 further results in the top side 590 of the illumination beam 588 and the bottom side 591 being approximately separated by the height 536 of the lens 510. The source beam 581 is generally divergent, which results in the light energy emitted by the LEDs 430 attenuating proportional to the distance from the LEDs 430. The light energy constituting the collimated illumination beam 588 is concentrated in the dimension illustrated by side view of Fig. 3. The illuminator 320 is, thus, able to illuminate objects at greater distances than it would without the use of the collimated illumination beam 588.

In order to efficiently collimate the source beam 581 to form the illumination beam 588, it is critical that the emitters 440 be precisely located on the focal axis 522, Fig. 2, of the lens 510. The focal axis 522 is located on the focal plane 534 at a distance of the back focal length 524 from the planar side 514 of the lens 510 and extends in the y-direction 342. If an LED is located too close to, or too far from, the lens 510 in the x-direction 340, the light emitted by the LED will not collimate. This may result in the light energy emitted by the LED being partially wasted because the light may diverge from the lens 510 or converge at an improper location. Furthermore, if an emitter 440 associated with an LED is not located on the focal plane 534, e.g., the emitter 440 is located a distance in the z-direction 344 from the focal plane 534, the light emitted by the LED, after passing through the lens 510, will not extend parallel to the focal plane 534. Accordingly, the light energy emitted by the LED may be partially wasted because it will be steered away from the object which it is supposed to illuminate. It has been found that the illumination intensity of an illumination system is more sensitive to variations in the location of the light source in the z-direction 344 than to variations in the x-direction 340 or the y-direction 342. In other words, variations in the location of the light source in the z-direction 344 relative to the lens 510 will have a large impact on the illumination intensity relative to variations in the x-direction 340 or the y-direction 342. Accordingly, although it is generally desirable to reduce or eliminate location variations in all three axes, it is particularly critical to minimize variations in the z-direction 344.

Conventional illuminators are not able to precisely control the location of the light source relative to the lens. Conventional illuminators may, for example, have LEDs mounted to a printed circuit board wherein the printed circuit board is positioned parallel to the planar surface of the lens, e.g., perpendicular to the focal plane of the lens. The printed circuit board and the lens are typically attached to a support structure and are not integrally formed as with the lens assembly 500 that has the lens 510 integrally formed with the reference surface 580. With regard to Fig. 3, the head of a conventional illuminator is positioned so that it is parallel to the planar surface 514 of the lens 510, e.g., the surface of the head extends in the z-direction 344. Accordingly, the conventional illuminator uses zero degree LEDs that emit light normal to the surface of the printed circuit board, which is the x-direction 340.

A conventional illuminator has two tolerances that affect the location of the lens relative to the LEDs. These tolerances ultimately affect the intensity of light that illuminates an object. The first tolerance is in the location of the LEDs relative to the board and the second tolerance is in the location of the board relative to the lens. These tolerances stack to affect the location of the LEDs relative to the lens in the x-direction 340, the y-direction 342, and the z-direction 344 and are described in detail below.

Illuminators have generally been found to be less sensitive to variations in the location of the LEDs relative to the lens with respect to the y-direction than with respect to variations in the x-direction 340 and the z-direction 344. The tolerance in the location of the LEDs relative to the board with respect the y-direction in a conventional illuminator is typically 0.08 millimeters. The tolerance in the location of the board relative to the lens in the y-direction is typically 0.3 millimeters. These two tolerances stack, resulting in an overall tolerance in the y-direction 342 between the lens and the LEDs of 0.38 millimeters. Illuminators, however, have generally been found to be minimally sensitive to variations in the location of the lens relative to the LEDs caused by these tolerances. In other words, the intensity of the illuminated object varies minimally with variations in the location of the LEDs relative to the lens in the y-direction 342.

Illuminators have generally been found to be more sensitive to variations in the location of the LEDs relative to the lens with respect to the x-direction than with respect to variations in the y-direction. The tolerance in the x-direction 340 with regard to the location of the LEDs relative to the board in a conventional illuminator is typically 0.025 millimeters. The tolerance in the x-direction 340 with regard to the location of the board relative to the lens is typically 0.3 millimeters. These two tolerances stack, resulting in an overall tolerance in the x-direction 340 between the lens and the LEDs of 0.325 millimeters. This tolerance may cause variations in the x-direction 340 between the LEDs and the lens, which results in the LEDs being too close to, or too far from, the focal axis of the lens. In either case, the illumination beam will not collimate. In other words, the illumination beam will either converge or diverge, resulting in the some of the light energy emitted by the LEDs not being focused on the object being illuminated and, thus, being wasted. Conventional illuminators overcome this problem by increasing the intensity of light emitted by the LEDs, which increases the power requirement of the illuminator and causes the above-described problems.

Illuminators have generally been found to be most sensitive to variations in the location of the LEDs to the lens with respect to the z-direction. Specifically, small variations in the z-direction 344 between the LEDs and the lens results in the illumination beam being steered away from the object. The tolerance in the z-direction 344 with respect to the location of the LEDs relative to the board in a conventional illuminator is typically 0.08 millimeters. The tolerance in the z-direction 344 with respect to the location of the board relative to the lens is typically 0.3 millimeters. These two tolerances stack, resulting in an overall tolerance in the z-direction between the lens and the LEDs of 0.38 millimeters.

This above-described tolerance between the location of the lens relative to the LEDs in the z-direction causes substantial variations in the location of the lens relative to the LEDs. These variations in the z-direction cause the illumination beam to be steered away from the object being illuminated. Conventional illuminators overcome this problem by increasing the width of the illumination beam, thereby illuminating the object regardless where the illumination beam is steered. When the width of the illumination beam is increased, however, the intensity of light constituting the illumination beam is reduced. Conventional illuminators overcome this problem by increasing the intensity of light emitted by the LEDs. This solution, however, requires that the illuminator use more power, which leads to the above-described problems.

As described above, conventional illuminators have generally been found to be most sensitive to variations in the z-direction between the location of the lens relative to the LEDs. Accordingly, the tolerance in the z-direction is the most critical; however, it does not represent the minimum tolerance between the location of the LEDs relative to the lens in a conventional illuminator. The tolerance in the x-direction 340 is the minimum tolerance between the LEDs and the lens in a conventional illuminator.

The aforementioned problems associated with high tolerances in the location of the lens relative to the LEDs in conventional illuminators are overcome by the illuminator 320 described herein. Overcoming these problems associated with high tolerances in the illuminator 320 results in the illumination beam 588 being reliably collimated and directed parallel to the focal plane 534. The reference surface 580 integrally formed with the lens 510 virtually eliminates the variation between the lens 510 and the surface 424. When the alignment holes 460 and 462 on the head 414 are aligned to the alignment holes 560 and 561 on the reference surface 580, the surface 424 of the head 414 will be precisely located relative to the lens 510. Accordingly, the illuminator 320 has minimal tolerances in the location of the lens 510 relative to the LEDs 430. In other words, the variation in the location of the lens 510 relative to the LEDs 430 is substantially limited to the variations between the LEDs 430 and the surface 424 of the head 414.

Referring to Figs. 3 and 4, variations in the location of the LEDs 430 relative to the surface 424 in the critical z-direction 344 are minimized by the use of the ninety degree LEDs 430. It has been found that variations in the location of the LEDs 430 relative to the surface 424 in the critical z-direction 344 is substantially equal to the variation in the thickness of the solder joints 480 between the LEDs 430 and the surface 424. This thickness variation is typically 0.025 millimeters, which, accordingly, is the tolerance in the z-direction 344 between the LEDs 430 and the surface 424. The reference surface 580 is integrally formed with the lens 510, which substantially eliminates the tolerance between the location of the surface 424 and the lens 510. Accordingly, variations between the LEDs 430 and the lens 510 in the critical z-direction 344 are typically only 0.025 millimeters.

It has been further found that the tolerance in the location of the LEDs 430 relative to the surface 424 in the x-direction 340 and the y-direction 342 is typically 0.08 millimeters. This tolerance is primarily due to the manufacturing techniques in positioning LEDs to a circuit board. The use of the reference surface 580 integrally formed with the lens 510 substantially reduces any tolerance between the surface 424 and the lens 510. Accordingly, the variations between the LEDs 430 and the lens 510 in both the x-direction 340 and the y-direction 342 are only typically 0.08 millimeter.

The variation in the location between the LEDs 430 relative to the lens 510 in the z-direction 344 of 0.025 millimeters is much less than the variation in the x-direction 340 and the y-direction 342, which is typically 0.08 millimeters. In other words, by using the ninety degree LEDs 430, the lowest tolerance direction is aligned with the most sensitive illuminator axis, i.e., the z-axis. The light emitters 440 of the LEDs 430, thus, may be precisely located on the focal axis 522 of the lens 510 as illustrated in Fig. 3 so as to most efficiently use the light emitted by the LEDs 430.

When the LEDs 430 are precisely located on the focal axis 522, Fig. 3, the illumination beam 588 will be collimated. The width 536 of the collimated illumination beam 588 may be selected, through known optical techniques, to be only as wide as is necessary for an imaging apparatus to image a bar code. When the illumination beam 588 is only as wide as is necessary to illuminate a bar code and all the light energy emitted by the LEDs 430 is focused onto the bar code, the illuminator 320 is operating efficiently. This efficiency allows the LEDs 430 to emit minimal light energy to illuminate a bar code, which, in turn, minimizes the energy, and thus electric current, required to be supplied to the picker 200, Fig. 1. This reduction in electric current required by the picker 200 reduces the amount of electric current required to be supplied by the power source 140, which may reduce the size, weight, and cost of the power supply 140.

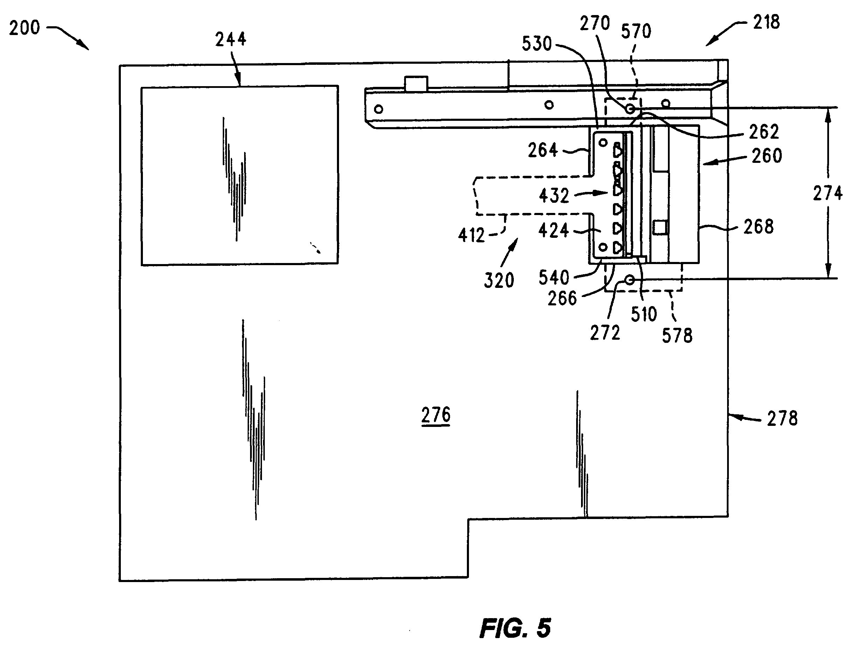

Referring to Fig. 5, having described the illuminator 320 and the picker 200, the illuminator 320 will now be described mounted to the picker 200. Fig. 4 illustrates the left side 218 of the picker 200 as viewed from inside the picker 200. The left side 218 may have an opening 260. The opening 260 may have a top side 262, a back side 264, a bottom side 266, and a front side 268. The left side 218 may have a left mourning hole 270 and a right mounting hole 272. The center point of the left mounting hole 270 may be separated from the center point of the right mounting hole 272 by a distance 274, e.g., 50 millimeters. The left side 218 may have a front surface 276 and a back surface 278. The front surface 276 faces the interior of the picker 200, Fig. 1.

The illuminator 320 may be mounted to the back surface 278 of the left side 218 so as to protrude through the opening 260. The lens 510 and the LEDs 430 are visible from the view of Fig. 5 through the opening 260. The opening 260 may be appropriately sized to accommodate the left wall 530, the right wall 540, and the lens 510. The left mounting tab 570 and the right mounting tab 578 may abut the back side 278. Two fastening devices, not shown, may be used to fasten the illuminator 320 to the left side 218. The fasteners pass through the holes 270 and 272 in the back side 218 and into the mounting holes 572 and 578, not shown in Fig. 4, in the left mounting tab 570 and the right mounting tab 578 respectively. Two protrusions, not shown, may be located on the back surface 278. The two protrusions may align with the alignment holes 610 and 620, Fig. 2, on the right mounting tab 578 to properly position the illuminator 320 relative to the left side 218.

Referring to Fig. 1, the autochanger 100 will now be described reading the bar code 112 affixed to the digital linear tape cartridge 110 and extracting the digital linear tape cartridge 110 from the slot 108 in the magazine 102. Reading the bar code 112 commences with the picker 200 moving to the appropriate transverse position 124 and vertical position 126 so as to position the picker 200 adjacent to the digital linear tape cartridge 110. Positioning the picker 200 is accomplished by the servo system 240 moving the picker 200 in a conventional manner.

When the picker 200 is adjacent to the digital linear tape cartridge 110, the illuminator 320, via the illumination beam 588, illuminates the bar code 112. Specifically, the illuminator 320 receives electric current from the power supply 140 via the rails 130 and 132, the distribution box 242, and the illuminator power line 248. When the illuminator 320 receives electric current, the illuminator 320 emits the illumination beam 588. The illuminator 320 is situated within the picker 200 so that the illumination beam 588 passes through the approximate mid-section of the opening 230 in the front side 214 of the picker 200. A narrow strip of the bar code 112, centered about the focal plane 534, is illuminated by the illuminator 320. The narrow strip is approximately as wide as the width 536 of the lens 510, Fig. 2.

Fig. 1 illustrates the illumination beam 588 as being fan-shaped. The illumination beam 588 is collimated in the dimension corresponding to the transverse direction 124. The illumination beam 588 diverges slightly from the illumination lens 320 in the dimension corresponding to the vertical direction 120. The divergence of the illumination beam 588 is dependent on the type of source used to produce the illumination beam 588 and the lens used to collimate the illumination beam 588. The illuminator 320 illustrated herein has a linear light source being the linear array 432 of LEDs 430, Fig. 2. The linear array 432 of LEDs 430 emits the source beam 581, Fig. 3, that diverges in the vertical direction 120. Additionally, the lens 510 is a rectangular lens and does not collimate light in the dimension corresponding to the vertical direction 120. The light source 400, Fig. 2, has been selected so that the illumination beam 588 diverges enough to illuminate the length of the bar code 112 when the picker 200 is located at a predetermined plunge location 122 relative to the digital linear tape cartridge 110. The divergence has been selected so as to illuminate solely the bar code, thereby no light energy is wasted illuminating objects that will not be imaged.

When the bar code 112 is illuminated, the imaging device 244 will read the bar code. The imaging device may receive an image of the bar code 112 via a conventional image beam, not shown. The image beam may intersect the illumination beam 588 at the bar code 112. Ideally, the image beam intersects the illumination beam 588 at the focal plane 534, however, the image beam may intersect the illumination beam 588 between the left side 592 and the right side 591 so long as the image beam also intersects the bar code 112.

The image beam contains an image of the bar code 112. The imaging device 244 converts the image of the bar code 112 to machine-readable image data for processing by a conventional bar code processor, not shown. The bar code processor may be integrated into the imaging device 244. When the bar code 112 is read, the autochanger 100 is able to identify the digital linear tape cartridge 110 pursuant to the information encoded in the bar code 112. If the autochanger 100 is able to determine the vertical position 120 and the transverse position 124 of the picker 200, the autochanger 100 may further determine the location of the digital linear tape cartridge 110 within the autochanger 100 for future reference.

If the digital linear tape cartridge 110 is required to be transported to a media player, not shown, the picker 200 will extract the digital linear tape cartridge 110 from the slot 108. The servo system 240 moves the picker 200 in the plunge direction 122 to a point where the picker 200 is able to extract the digital linear tape cartridge 110 from the magazine 102. In some applications the picker 200 is unable to move in the plunge direction 122 and is, thus, always in the proper plunge position 122 to extract the digital linear tape cartridge 110 from the magazine 102. The plunge mechanism 252 then operates in a conventional manner to extract the digital linear tape cartridge 110 from the magazine 102 and to draw the digital linear tape cartridge 110 into the picker 200. The servo system 240 then operates to move the picker 200 to the vicinity of the media player to insert the digital linear tape cartridge 110 into the media player.

The distribution box 242 may selectively activate the components within the picker to reduce the power consumed by the picker. For example, the distribution box 242 terminate power to the illuminator 320 and the imaging device 244 when either the plunge mechanism 252 or the servo system 240 is active. The illuminator 320 and the imaging device 244, however, must be activated simultaneously in order to read a bar code.

Having described an embodiment of the illuminator 320, other embodiments of the illuminator 320 will now be described. Referring again to Fig. 2, the light source 400 has been described as having a linear array 432 of LEDs 430. This linear array 432 produces substantially uniform light intensity in the illumination beam 588, Fig. 1. The light source 400, however, may have a single light-emitting element, such as an LED. The single light-emitting element may be less costly than the array 432, however, the intensity of light in the illumination beam 588, Fig. 1, may not be substantially uniform. Furthermore, should the single light-emitting element fail, the illuminator 320 will be rendered inoperable.

The lens assembly 500 may be formed from a variety of different materials provided that light generated by the light source 400 may pass through the lens 510. The lens assembly 500 may, for example, be made of transparent plastic as is known in the art. Alternatively, the lens assembly 500 may be made of a material that passes a selected band of light frequencies. In this embodiment, the material comprising the lens assembly 500 functions as an optical filter.

Referring again to Fig. 1, the illumination beam 588 is directed through the opening 230 in the front side 214 of the picker 200 to intersect the bar code 112. Directing the illumination beam 588 may be accomplished my mounting the illuminator 320 to the left side 218 of the picker 200 so that the reference surface 580, Fig. 2, is not parallel to the left side 218 of the picker 200. A wedge or other similar spacing device may, as examples, be located between the illuminator 320 and the left side 218 of the picker to properly steer the illumination beam 588. An alternative method of steering the illumination beam 588 is disclosed in the United States patent application, serial number , previously referenced (attorney docket number 10971597-1).

Referring to Fig. 3, the illumination beam 588 has been described herein as being collimated. An embodiment of the illuminator 320 locates the LEDs 430 a distance in the x-direction 340 form the back focal length 534. In this embodiment, the illumination beam 588 may converge or diverge from the lens 510. This embodiment may be used to create a predetermined illumination pattern on an object. The location of the LEDs 430 may be controlled in the x-direction, thus, the illumination pattern may not vary.

The illuminator 320 described herein has been incorporated into a bar code reading system of the type used in an autochanger 100. It is to be understood, however, that this use of the illuminator 320 is for illustration purposes only and that the illuminator may be used in other applications, e.g., electronic scanning devices and hand-held bar code readers.

It is contemplated that the inventive concepts herein described may be variously otherwise embodied and it is intended that the appended claims be constructed to include alternative embodiments of the invention except insofar as limited by the prior art.

## Claims

1. An illumination system (320) comprising:
a lens assembly (500) having a surface (580) formed thereon;
at least one light source (400) located on said surface (580);
a lens (510) formed in said lens assembly (500);
a first light path portion extending between said lens (510) and an object to be illuminated by said at least one light source (400);
a second light path portion extending between said at least one light source (400) and said lens (510);
wherein at least a portion of said surface (580) is substantially parallel to said second light path.

2. The illumination system (320) of claim 1 wherein said lens (510) is a collimating lens.

3. The illumination system (320) of claim 1 wherein said at least one light source (400) comprises at least one light emitting element (430) mounted to a substrate (410) and wherein said substrate (410) is mounted to said surface (580).

4. The illumination system (320) of claim 1 wherein said at least one light source (400) comprises at least one surface mount light emitting diode (430).

5. The illumination system (320) of claim 1 wherein said lens (510) has a focal axis (522) and wherein said at least one light source (400) is approximately located on said focal axis (522).

6. A method of illuminating an object, said method comprising:
providing a lens assembly (500) having a surface (580) formed thereon;
providing at least one light source (400) mounted to said surface (580);
providing a lens (510) formed in said lens assembly (500);
providing a first light path portion extending between said lens (510) and an object to be illuminated by said at least one light source (400);
providing a second light path portion extending between said at least one light source (400) and said lens (510);
wherein at least a portion of said surface (580) is substantially parallel to said second light path portion.

7. The method of claim 6 wherein said lens (510) is a collimating lens.

8. The method of claim 6 wherein said at least one light source (400) comprises at least one light emitting element (430) mounted to a substrate (410) and wherein said substrate (410) is mounted to said surface (580).

9. The method of claim 6 wherein said at least one light source (400) comprises at least one surface mount light emitting diode (430).

10. The method of claim 6 wherein said lens (510) has a focal axis (522) and wherein said at least one light source (400) is approximately located on said focal axis (522).
